# EUROPÄISCHE PATENTANMELDUNG

(11) **EP 3 992 925 A1**
(43) Veröffentlichungstag der Anmeldung: **04.05.2022**
(21) Anmeldenummer: 21204091.9
(22) Anmeldetag: 22.10.2021
(51) Int. Cl.: G06V 40/13, G06V 40/60

(54) **VORRICHTUNG UND VERFAHREN ZUR BERÜHRUNGSLOSEN OPTISCHEN ABBILDUNG EINES AUSGEWÄHLTEN OBERFLÄCHENBEREICHES EINER HAND**

(30) Priorität: 27.10.2020 DE 102020131513
(71) Anmelder: JENETRIC GmbH, 07745 Jena (DE)
(72) Erfinder: Michalsky, Tom, 04277 Leipzig (DE); RIEHL, Philipp, 07745 Jena (DE); Krenzer, Daniel, 99848 Wutha-Farnroda (DE); RICHTER, Undine, 07749 Jena (DE); REINHOLD, Jörg, 07743 Jena (DE)
(74) Vertreter: Gleim Petri Oehmke Patent- und Rechtsanwaltspartnerschaft mbB

(57) **Zusammenfassung**

Vorrichtung und Verfahren zur berührungslosen optischen Abbildung eines ausgewählten Oberflächenbereiches einer Hand eines Nutzers, in der der Oberflächenbereich berührungslos in eine Soll-Position gegenüber einer Bilderfassungseinheit aktiv geführt wird. Dazu weist die Vorrichtung einen Rahmen (5) auf, in dem die Hand grob zur Soll- Position, eine Ist-Position einnehmend, eingeführt wird. Darüber hinaus enthält die Vorrichtung mindestens ein aktives Mittel zur Lokalisierung der jeweiligen Ist-Position und eine Ausgabeeinheit (7) über die dem Nutzer eine Rückmeldung gegeben wird und er iterativ den Oberflächenbereich in die Soll-Position führt. Vorteilhaft sind die Vorrichtung und das Verfahren dazu geeignet eine natürliche Hand von einer künstlichen Hand zu unterscheiden.

## Beschreibung

Mit dem Ausbruch des Corona-Virus (SARS-CoV-2) Ende 2019/Anfang 2020 ist eine globale Krise ausgelöst worden. Das Virus ist extrem ansteckend und über Tröpfchen-und Schmierinfektionen übertragbar. Drehscheiben für die Virusübertragung sind dabei u.a. internationale Flughäfen. Hier werden seit geraumer Zeit zur Identifikation der Fluggäste zunehmend mehr Fingerabdruckscanner eingesetzt. Die erste Generation von Fingerabdruckscannern waren kontaktbasierte Geräte, bei denen eine Hand, einzelne Finger, alle Finger ein oder beide Daumen (biometrisches Objekt) auf eine transparente Benutzeroberfläche gelegt wurde. Um bei der Verwendung derartiger Geräte in einer virologisch unsicheren Zeit Schmierinfektionen zu vermeiden, muss nach der Benutzung durch eines jeden Nutzers die Benutzeroberfläche gereinigt werden, was die permanente Mitwirkung eines weiteren Nutzers erforderlich macht. Bei Geräten, die über eine automatisierte interaktive Nutzerführung verfügen, muss grundsätzlich für die sachgerechte Nutzung des Gerätes keine weitere Person anwesend sein, sodass hier durch die Notwendigkeit der regelmäßigen Reinigung der Benutzeroberfläche eine zusätzliche Arbeitskraft notwendig wird.

Bei einer neuen, kontaktlosen Generation von optischen Fingerabdruckscannern, basierend auf einer strukturierten Beleuchtung, wird das biometrische Objekt nicht mehr aufgelegt, sondern wird in einem virtuellen Objektbereich des optischen Systems des Gerätes angeordnet.

Der Begriff Fingerabdruckscanner hat sich als ein Gattungsbegriff für die Geräte eingebürgert, bei denen biometrische Objekte, im Sinne von Hautstrukturen von Fingern, nachfolgend als Oberflächenbereiche bezeichnet, optisch erfasst werden. Dabei ist es egal ob das betreffende Gerät für alle oben genannten biometrischen Objekte oder für nur eines oder einen Teil davon ausgelegt ist. Es ist auch egal wie das erfasste Bild des biometrischen Objektes erzeugt wird, z. B. in dem das Objekt gescannt oder im Ganzen abgebildet wird. Der Begriffsbestandteil Abdruck ist historisch begründet. Er steht hier für jede Art von Bild des biometrischen Objektes, unabhängig davon, ob das Objekt während der Erfassung auf eine Bedienoberfläche gedrückt oder berührungslos in einem virtuellen Objektbereich (oft auch Scanbereich genannt) angeordnet ist.

Die größte Herausforderung bei den berührungslosen Fingerabdruckscannern besteht darin die Hand in dem virtuellen Objektbereich korrekt zu positionieren, so dass ein Bild hoher Auflösung erzeugt werden kann. Dabei soll der Nutzer automatisiert interaktiv geführt werden.

In der US 2018/0330142 A1 ist ein Gerät zum Erfassen von Fingerabdrücken beschrieben, mit einer Erfassungszone durch die eine Hand des Nutzers bewegt wird. Das Gerät weißt eine transparente Deckfläche und einen hierzu in einem Abstand von wenigen Zentimetern parallel angeordnete Projektionsfläche auf, zwischen denen sich die Erfassungszone befindet. Die Erfassungszone ist frontal und lateral zu der für den Nutzer vorgesehenen Position offen, so dass dieser seine Hand vor dem Körper bequem horizontal durch die Erfassungszone bewegen kann. Innerhalb der Erfassungszone befinde sich das Objektfeld einer statischen Zeilen-Kamera. Der Kamerasensor weist eine Bildaufnahmegeschwindigkeit auf, die ausreichend groß ist, um aus den Einzelbildaufnahmen von "Zeilen" der Hand bei einer gebräuchlichen Bewegungsgeschwindigkeit der Hand ein klares Bild der Finger aufzunehmen zu können.

Aus der US 2015/0208059 A1 sind eine Vorrichtung und ein Verfahren bekannt mit denen aus einer Vielzahl von Bildern 3D- Koordinaten z.B. eines Fingers bestimmt werden, aus denen eine 2D-Darstellung vergleichbar mit einem Fingerabdruck der durch Abrollen eines mit Tinte behafteten Fingers erzeugt wird. Die Vorrichtung weist hierfür einen Projektor mit einer strukturierten Beleuchtung auf, mit der ein oder mehrere Lichtmuster auf die dreidimensionale Oberfläche des Fingers projiziert wird, wobei das oder die Lichtmuster charakteristisch für die biometrische Struktur der Fingeroberfläche deformiert werden. Von dem oder den deformierten Lichtmustern werden ein oder mehrere Bilder mittels einer Kamera oder mehrerer Kameras aufgenommen. Die Fingeroberfläche ist hierbei in einem vorgegebenen Abstand zu dem Projektor und der oder den Kameras in einer virtuellen Ebene angeordnet.

Zur Positionierung der Hand weißt die Vorrichtung einen Schlitz auf in dem die rechte oder linke Hand eingeführt wird. Der Schlitz schließt ein Scanvolumen ein in dem die Hand vor einem Hintergrund positioniert wird der als Referenzebene wirkt. An dieser Referenzebene sind Positionierstifte vorhanden die die korrekte Positionierung der Hand innerhalb des Scanvolumens unterstützen, so dass die Fingeroberfläche in dem vorgegebenen Abstand zu dem Projektor und der oder den Kameras in einer Objektebene positioniert wird. Die Anordnung der Positionierstifte ist hier für die Soll-Position der Hand bestimmend.

Es ist in der vorgenannten US 2015/0208059 A1 auch eine Nutzerführung offenbart, die dem Nutzer bei der Positionierung der Hand führt. Nach dem Einführen der Hand in den Schlitz werden Probebilder geringer Auflösung erzeugt, wobei der Nutzer in den Probebildern die Position seiner Hand zu den Positionierstiften erkennen kann und er so bis zur korrekten Position der Hand geführt wird. Zusätzlich oder alternativ kann die Nutzerführung durch eine automatisierte Sprachinformation oder durch Weisungen einer Person erfolgen.

Nachteilig an der hier offenbarten Vorrichtung ist insbesondere, dass die Positionierung der Hand erfolgt, indem diese in Kontakt mit den Positionierstiften gebracht wird. Eine Methode, bei der berührungslos die Fingeroberfläche in einer virtuellen Ebene gehalten und optisch erfasst wird, lässt sich insbesondere dort und dann vorteilhaft anwenden, wo ein Hautkontakt unerwünscht ist. Durch die Positionierung der Hand an Positionierstiften, wird der sich aus der kontaktfreien Erfassung der Fingeroberfläche für den Nutzer ergebende Vorteil, nämlich, dass er mit nichts in Berührung kommt und somit keinen Hautkontakt mit irgendwelchen Oberflächen hat, zunichte gemacht.

Aus der US 2020/0202101 A1 ist eine weitere Erfassungsvorrichtung zum berührungslosen Erfassen biometrischer Daten, wie Fingerabdrücke und Handabdrücke bekannt.

Die Erfassungsvorrichtung umfasst ein Elektronikfach indem alle Hardwarekomponenten einschließlich einer Lichtquelle und einer Kamera untergebracht sind und eine Gehäuseführung die einen Bilderfassungsbereich einschließt. Ein Objekt, z.B. eine Hand, welches exakt im Bilderfassungsbereich positioniert ist kann mit höchster Qualität von der Kamera aufgenommen werden. Es werden verschiedene Ausführungen für die Gehäuseführung angegeben, mit denen eine exakte Positionierung möglich gemacht wird, ohne dass das zu positionierende Objekt mit der Gehäuseführung in Berührung kommt. Grundsätzlich ist an der Gehäuseführung ein Kragen ausgebildet, der den Bilderfassungsbereich bis auf eine Eintrittslücke umschließt. Der Kragen stellt einen visuellen Indikator zur groben Positionierung dar.

Das heißt der Nutzer, der seine Hand in den Bilderfassungsbereich führt, wird so die Hand bereits aus der richtigen Richtung und in ein enges Raumvolumen um den Bilderfassungsbereich bewegen. Vorteilhaft soll die Gehäuseführung einen Platzindikator enthalten. Der Platzindikator kann einen Sensor zur Erfassung der Position des Objektes und einen Ausgang zum Signalisieren der korrekten Position des abzubildenden Objektes aufweisen. Aus der Offenbarung, dass die Lokalisierung der Hand mit wenigstens einem IR-Sensor erfolgen kann, lässt sich ableiten, dass hier die korrekte Position nur bezogen auf eine axiale Richtung gemeint sein kann. Die Ausgabe kann z. B. ein blinkendes farbiges Licht sein, dessen Farbe oder Blinkfrequenz sich ändern kann. Die Ausgabe kann auch die Anzeige eines geeigneten Bildsymbols sein, das dem Nutzer visuelle Anweisung für jeden Schritt der Bilderfassung bereitstellt. Das Bildsymbol kann z. B. zuerst eine rechte Hand, dann eine linke Hand und dann die Daumen des Nutzers anzeigen. Die Ausgabe kann auch eine Audiosignaländerung sein. Der Platzindikator kann auch eine grafische Anzeigevorrichtung sein die Bilder und / oder bewegte Bilder darstellt. Die Bilder können Texte, Symbole oder andere grafischen Elemente sein. Der Platzindikator kann mit einem oder mehreren im Elektronikfach vorhandenen Infrarotsensoren verbunden sein. Über die am Objekt zurück reflektierte IR-Strahlung wird festgestellt ob ein Objekt in den Bilderfassungsbereich eingetreten ist, was über eine vertikale Bewegung innerhalb des Kragens erfolgt. Überschreitet das durch die reflektierte Strahlung gebildete Signal einen vorgegebenen Schwellwert ist die Hand im Bilderfassungsbereich angekommen und die Steuerung im Elektronikfach löst die Lichtquelle und die Kamera aus. Während der Bilderfassung wird der Infrarotsensor deaktiviert, um Fremdlichteinflüsse bei der Bilderfassung zu vermeiden.

Nachteilig an einer Erfassungsvorrichtung gemäß der vorgenannten US 2020/0202101 A1 ist, dass eine aktive Führung nur in axialer Richtung des Abbildungssystems erfolgt. Die radiale Ausrichtung der Hand wird ausschließlich durch die Eintrittslücke des Kragens vorgegeben. Indem die radiale Position der Hand ausschließlich durch die Eintrittslücke des Kragens vorgegeben wird, darf die Eintrittslücke nur unwesentlich breiter sein als eine breite Hand breit ist. Dadurch besteht die erhöhte Gefahr, dass diese beim Einführen in den Kragen mit diesem in Berührung kommt und dass die radiale Positionierung für verschieden große Hände unterschiedlich genau erfolgt.

Es ist die Aufgabe der Erfindung eine Vorrichtung zu schaffen, die geeignet ist die in einem Rahmen in einer Ist-Position gehaltene Hand eines Nutzers zu lokalisieren und den Nutzer aktiv zu führen bis seine Hand nicht nur axial, sondern auch radial in einer Soll-Position ankommt.

Es ist auch die Aufgabe der Erfindung ein hierfür geeignetes Verfahren zu finden.

Vorteilhaft soll nicht nur wenigstens ein Bild von einem Oberflächenbereich der Hand in der Soll-Position aufgenommen werden, sondern auch erkannt werden, ob es sich bei der Hand um eine natürliche Hand handelt.

Die Aufgabe wird für eine Vorrichtung zur optischen Abbildung eines ausgewählten Oberflächenbereiches einer Hand eines Nutzers, mit einem Gehäuse in dem eine Bilderfassungseinheit, enthaltend eine Hauptkamera mit einer optischen Achse und eine Beleuchtungseinheit, untergebracht ist, einer Steuer- und Recheneinheit, einer Ausgabeeinheit, einem außerhalb des Gehäuses angeordneten, über ein Gestell mit dem Gehäuse verbundenen Rahmen mit Rändern, die eine einseitig offene Aussparung begrenzen, die frontal zu einer Nutzerposition des Nutzers geöffnet ist und in der der Oberflächenbereich durch den Nutzer positioniert wird, eine Ist-Position einnehmend, wobei innerhalb des Rahmens eine Objektebene der Hauptkamera mit einem Tiefenschärfebereich angeordnet ist, in dem sich eine Soll-Position für den Oberflächenbereich befindet, gelöst.

Es ist erfindungswesentlich, dass ein erstes aktives Mittel zur Lokalisierung der Ist-Position in axialer Richtung der optischen Achse und ein zweites aktives Mittel zur Lokalisierung der Ist-Position in radialer Richtung der optischen Achse vorhanden ist, oder dass ein universales aktives Mittel zur Lokalisierung der Ist-Position in axialer und in radialer Richtung der optischen Achse vorhanden ist. In dem auch in radialer Richtung eine aktive Lokalisierung erfolgt, kann auch eine aktive Führung in radialer Richtung in die Soll-Position erfolgen. Der Rahmen dient somit nur der Grobpositionierung, weshalb die Aussparung deutlich größer als das Objektfeld der Hauptkamera ausgeführt werden kann, womit Berührungen des Rahmens sicher vermieden werden und das Objektfeld nicht größer als eine breite Hand ausgeführt werden muss, was einer schnellen Bildverarbeitung entgegenkommt.

Vorteilhaft enthält das universale aktive Mittel eine Hilfskamera, die im Vergleich zur Hauptkamera ein größeres Objektfeld und eine geringere Auflösung aufweist, wobei das Objektfeld der Hilfskamera und das Objektfeld der Hauptkamera in der Objektebene der Hauptkamera liegen.

Alternativ ist es vorteilhaft, wenn das zweite aktive Mittel mindestens einen ersten Abstandssensor enthält, der parallel zur Objektebene abstrahlt, oder das universelle aktive Mittel mindestens einen ersten Abstandssensor und mindestens einen zweiten Abstandssensor, der unter einem Winkel ungleich 0° zu dem wenigstens einen ersten Abstandssensor abstrahlt, enthält.

Es ist auch von Vorteil, wenn das zweite aktive Mittel zwei erste Lichtschranken enthält, die ein erstes Lichtstrahlenpaar bilden und in oder parallel zur Objektebene abstrahlend, einen Winkel ungleich Null miteinander einschließend, spiegelsymmetrisch zu einer durch die optische Achse verlaufende Parallelen zu einer Einführrichtung der Hand angeordnet sind.

Vorteilhaft ist die Ausgabeeinheit ein Display .

Auch kann das zweite aktive Mittel oder das universelle aktive Mittel vorteilhaft ein Projektor sein, der auf einer der Hauptkamera abgewandten Seite der Objektebene angeordnet ist und ein Muster in die Aussparung projiziert.

Die Ausgabeeinheit kann vorteilhaft einen Ultraschallgeber enthalten, der geeignet ist haptisch wahrnehmbare Druckpunkte auf einer virtuellen Ebene, welche der Soll-Position in axialer Richtung entspricht, zu erzeugen, oder einen Druckluftgeber enthalten, mit einer flächenhaften Anordnung von Düsen, die in die Aussparung gerichtet sind.

Die Aufgabe wird für ein Verfahren zur optischen Abbildung eines ausgewählten Oberflächenbereiches einer Hand eines Nutzers, bei dem der ausgewählte Oberflächenbereich in eine vorgegebene Soll-Position, innerhalb eines Tiefenschärfebereiches um eine Objektebene einer Hauptkamera mit einer optischen Achse positioniert wird, wobei der Nutzer den zu erfassenden Oberflächenbereich in einen den Tiefenschärfebereich einschließenden Rahmen einführt, wobei der Oberflächenbereich eine Ist-Position einnimmt, die Ist-Position in axialer Richtung bezogen auf die optische Achse lokalisiert wird, und der Nutzer mittels einer Ausgabeeinheit, iterativ geführt, die Ist-Position ändert und den Oberflächenbereich in axialer Richtung zu der vorgegebenen Soll-Position bewegt, in der von dem Oberflächenbereich wenigstens ein Bild mit der Hauptkamera erzeugt wird, gelöst.

Es ist erfindungswesentlich, dass die Ist-Position auch in radialer Richtung bezogen auf die optische Achse lokalisiert wird und der Nutzer, iterativ geführt, den Oberflächenbereich auch in radialer Richtung in die vorgegebene Soll-Position bewegt.

Vorteilhaft wird die Ist-Position wiederholt in axialer und radialer Richtung durch die Auswertung einer Vielzahl von zeitlich nacheinander aufgenommenen Bilder einer Hilfskamera lokalisiert, wobei die Bilder der Hilfskamera mit einer geringeren Auflösung erstellt werden als das wenigstens eine Bild mit der Hauptkamera eine Auflösung aufweist. Dabei werden vorteilhaft die mit einer geringeren Auflösung zeitlich nacheinander aufgenommenen Bilder untereinander verglichen und analysiert, ob die Bewegung zur Soll-Position hin durch Zitterbewegungen oder das Pulsieren von Blutgefäßen überlagert wird, um eine echte von einer unechten Hand zu unterscheiden.

Es ist von Vorteil, wenn über die Ausgabeeinheit Weisungen gegeben werden die Handhaltung zu verändern, um aus dem Ablauf der Veränderung der Handhaltung gegebenenfalls auf eine natürliche Hand zu schließen.

Alternativ werden die Bilder der Hilfskamera vorteilhaft auf für eine natürliche Hand untypische Unstetigkeitsstellen oder Gradienten analysiert, um gegebenenfalls auf eine künstliche Hand zu schließen.

Auch ist es von Vorteil, den Oberflächenbereich mit Licht wenigstens einer Wellenlänge zu bestrahlen oder einen Messstrahl mit der wenigstens einen Wellenlänge auf den Oberflächenbereich zu richten. Dabei wird das Licht durch Blutgefäße in der Hand absorbiert, wobei bei Licht mit nur einer Wellenlänge eine räumliche Strukturierung im Bild entsprechend der Blutgefäßstruktur entsteht und bei Licht mit mehr als einer Wellenlänge das reflektierte Wellenlängenspektrum bzw. die Menge des an dem Oberflächenbereich reflektierten Lichtanteils analysiert wird, um gegebenenfalls auf eine natürliche Hand zu schließen.

Um gegebenenfalls auf eine künstliche Hand zu schließen, ist es auch von Vorteil das mindestens eine Bild der Hauptkamera auf untypische Abstände von Bergen und Tälern in einer Papillarstruktur des Oberflächenbereiches zu analysieren.

Zur iterativen Führung kann vorteilhaft in die Aussparung ein zweidimensionales Muster projiziert werden, und der Nutzer bewegt die Hand innerhalb des Rahmens bis das Muster auf der Rückseite der Hand vollständig und scharf abgebildet wird.

Dabei ist es von Vorteil, wenn die Abbildung des Musters in seiner Farbe oder in seiner Auflösung in Abhängigkeit von der Nähe zur Soll-Position verändert wird.

Die iterative Führung kann vorteilhaft auch mittels durch Ultraschall oder Luftdruck erzeugter, haptisch wahrnehmbarer Druckpunkte auf dem Oberflächenbereich unterstützt werden. Zusätzlich oder alternativ kann mittels der durch Ultraschall oder Druckluft erzeugten, haptisch wahrnehmbaren Druckpunkte der Nutzer zu Bewegungen animiert werden, die nur durch eine natürliche Hand erfolgen können, um eines solche zu erkennen.

Die Erfindung soll nachfolgend anhand von Zeichnungen näher erläutert werden. Hierbei zeigen:
Fig. 1 eine Vorrichtung in allgemeingültiger Darstellung für die verschiedenen Ausführungsbeispiele,
Fig. 2a -b eine Vorrichtung mit einem universalen aktiven Mittel, enthaltend eine Hilfskamera, zur Lokalisierung der Ist-Position in axialer und in radialer Richtung,
Fig. 3 eine Vorrichtung mit einem zweiten aktiven Mittel, enthaltend zwei Abstandssensoren, zur Lokalisierung der Ist-Position in radialer Richtung,
Fig. 4a-b eine Vorrichtung mit einem zweiten aktiven Mittel, enthaltend zwei Lichtschrankenpaare, zur Lokalisierung der Ist-Position in radialer Richtung,
Fig. 5 eine Vorrichtung mit einem universalen aktiven Mittel, enthaltend einen Projektor zur Lokalisierung der Ist-Position in axialer und in radialer Richtung und
Fig. 6 eine Vorrichtung mit einem Ultraschallgeber, zur aktiven Führung in axialer Richtung.

Eine erfindungsgemäße Vorrichtung dient der optischen Abbildung eines ausgewählten Oberflächenbereiches, genauer der Papillarstruktur eines ausgewählten Oberflächenbereiches von vier Fingern einer Hand eines Nutzers. Der Oberflächenbereich kann aber auch nur durch einzelne Finger oder einen einzelnen bzw. beide Daumen gegeben sein. Bei Personen mit mehr als 4 Fingern an einer Hand (exklusive Daumen) oder mehr als einem Daumen an einer Hand, was in seltenen Fällen vorkommt, kann der Oberflächenbereich auch durch entsprechend mehr Finger bzw. Daumen pro Hand gegeben sein.

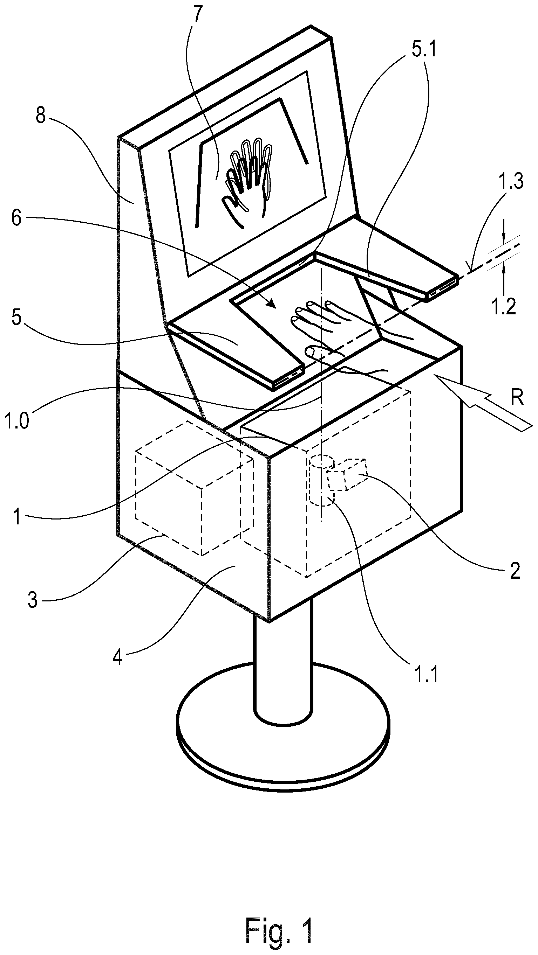

Die Vorrichtung ist in **Fig. 1** als Prinzipskizze dargestellt und enthält grundsätzlich eine Bilderfassungseinheit 1, enthaltend eine Hauptkamera 1.1 mit einer optischen Achse 1.0 und eine Beleuchtungseinheit 2, welche in der Lage ist, räumlich strukturierte Abbildungen in ein oder mehreren Farben darzustellen, eine Rechen- und Steuereinheit 3, ein Gehäuse 4, eine Ausgabeeinheit 7, einen Rahmen 5, und ein erstes und zweites aktives Mittel oder ein universales aktives Mittel (hier nicht dargestellt), wobei das erste aktive Mittel zur Bestimmung der Lokalisierung der Ist-Position in axialer Richtung, das zweite aktive Mittel zur Bestimmung der Lokalisierung der Ist-Position in radialer Richtung, und das universale aktive Mittel zur Lokalisierung der Ist-Position in axialer und radialer Richtung, zur optischen Achse 1.0 geeignet ist.

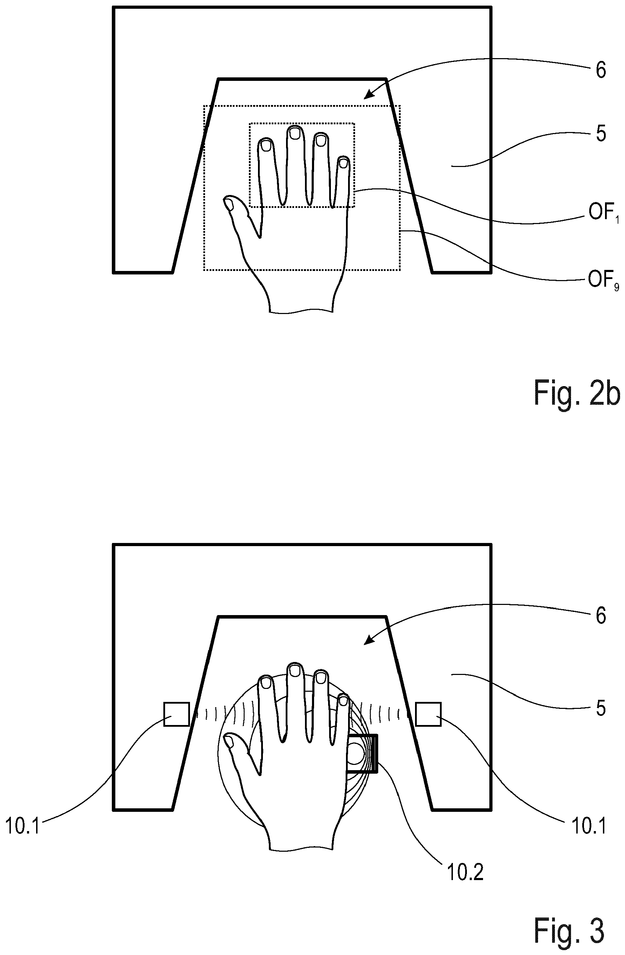

Der Rahmens 5 ist zur Bilderfassungseinheit 1 so angeordnet, dass eine Objektebene 1.3 der Hauptkamera 1.1 und entsprechend ein Tiefenschärfebereich 1.2, um die Objektebene 1.3, innerhalb einer Aussparung 6 des Rahmens 5 liegt. Der Tiefenschärfebereiches 1.2 und das Objektfeldes OF₁ der Hauptkamera 1.1, siehe **Fig. 2b****,** das kleiner der Aussparung 6 ist, begrenzen den Bilderfassungsbereich. Ein im Bilderfassungsbereich angeordneter Oberflächenbereich gilt als ein in einer Soll-Position angeordneter Oberflächenbereich und wird scharf abgebildet. Der Mittelpunkt des Bilderfassungsbereiches liegt im Schnittpunkt der optischen Achse 1.0 und der Objektebene 1.3. Der Rahmen 5 ist in einem Abstand oberhalb des Gehäuses 4 in einer bevorzugten Betriebsposition der Vorrichtung horizontal ausgerichtet und mit dem Gehäuse 4 in einer festen Relativlage zueinander angeordnet.

Die Ausgabeeinheit 7 ist am Gehäuse 4 angeordnet, kann aber auch losgelöst von diesem frei im Raum angeordnet sein. Insbesondere, wenn die Ausgabeeinheit 7 visueller Natur ist, ist sie bezogen auf die in einer Betriebsposition stehenden Vorrichtung vorteilhaft oberhalb des Rahmens 5 in Augenhöhe des Nutzers angebracht. Bei der erfindungsgemäßen Vorrichtung, steht das Wohlbefinden und die intuitive Bedienung durch den Nutzer im Mittelpunkt, wobei jegliche Berührungen mit der Vorrichtung vermieden werden sollen.

Der Rahmen 5 ist über ein Gestell 8 mit dem Gehäuse 4 starr verbunden und weist Ränder 5.1 auf, welche die einseitig offene Aussparung 6, die frontal zu einer Nutzerposition eines Nutzer geöffnet ist, begrenzen. Die Ränder 5.1 sind vorteilhaft farblich abgesetzt, um von dem Nutzer intuitiv wahrgenommen zu werden, können aber auch mit einer ansteuerbaren farbigen Beleuchtung ausgestattet sein, um eine korrekte oder inkorrekte Positionierung der Hand in der Aussparung 6 farblich zu quittieren bzw. die Aufmerksamkeit des Nutzers auf sich bzw. die Objektebene 1.3 zu ziehen. Der Rahmen 5 mit der Aussparung 6 ist ein Mittel zur Grobpositionierung des Oberflächenbereiches in axialer und radialer Richtung zur optischen Achse 1.0. Durch eine ansteuerbare Beleuchtung kann er gleichzeitig auch als die Ausgabeeinheit 7, zum Bereitstellen einer Rückmeldung an den Nutzer dienen, oder zusätzlich zu der Ausgabeeinheit 7, zur Information des Nutzers dienen. Indem der Nutzer, alle vier Finger einer Hand, oder auch nur einzelne Finger oder seine Daumen in einer Einführrichtung R in den Rahmen einführt, positioniert er den Oberflächenbereich in eine Ist-Position, die in der Regel nicht der Soll-Position entspricht, aber grob in deren Nähe liegt.

Neben einer deutlich breiteren Ausführung der Aussparung 6 im Vergleich zu einer breiten Hand, wird um jegliche Berührung der Vorrichtung zu vermeiden, genügend Platz zwischen dem Gehäuse 4, in dem sich die Bilderfassungseinheit 1 befindet, und dem Rahmen 5, wo der Oberflächenbereich platziert wird, vorgesehen.

Es ist erfindungswesentlich, dass die Vorrichtung, zusätzlich zu dem Rahmen 5, zur Grobpositionierung für eine intuitive Führung des Oberflächenbereiches in die Soll-Position, neben dem ersten aktiven Mittel zur Bestimmung der Lokalisierung der Ist-Position in axialer Richtung der optischen Achse 1.0, ein zweites aktives Mittel zur Lokalisierung der Ist-Position in radialer Richtung der optischen Achse 1.0, aufweist, oder stattdessen, ein universales aktives Mittel aufweist, das zur Bestimmung der Lokalisierung der Ist-Position in axialer Richtung und in radialer Richtung der optischen Achse 1.0 geeignet ist.

Erfindungswesentlich für ein erfindungsgemäßes Verfahrens ist, dass die zufällige Raumlage eines Oberflächenbereiches der Hand eines Nutzers in einem Rahmen 5 als Ist-Position in axialer und radialer Lage, bezogen auf eine optische Achse 1.0 einer Hauptkamera 1.1 einer Bilderfassungseinheit 1, erfasst wird, und der Nutzer iterativ geführt wird, die Ist-Position verändernd, bis der Oberflächenbereich in einer Soll-Position angekommen ist, die einer vorbestimmten Raumlage des Oberflächenbereiches entspricht. Dazu führt der Nutzer den zu erfassenden Oberflächenbereich in einen bevorzugt horizontal ausgerichteten, und zu dem Nutzer hin geöffneten, den Tiefenschärfebereich 1.2 einschließenden Rahmen 5 ein. Der Oberflächenbereich nimmt dort eine Ist-Position ein und wird durch den Nutzer iterativ in axialer und radialer Richtung in die Soll-Position geführt, wo von dem Oberflächenbereich wenigstens ein Bild mit der Hauptkamera 1 erzeugt wird. Insbesondere in radialer Richtung kann die Ist-Position sehr stark von der Soll-Position abweichen, da die Aussparung 6 zur sicheren Vermeidung einer Berührung wesentlich größer ausgeführt wird, als eine breite Hand breit ist. Um den Oberflächenbereich iterativ von der Ist-Position in die Soll-Position zu führen, werden zeitgleich die jeweilige Ist-Position des Oberflächenbereiches lokalisiert, und die Ergebnisse der Lokalisierung zur Ansteuerung der Ausgabeeinheit 7 verwendet.

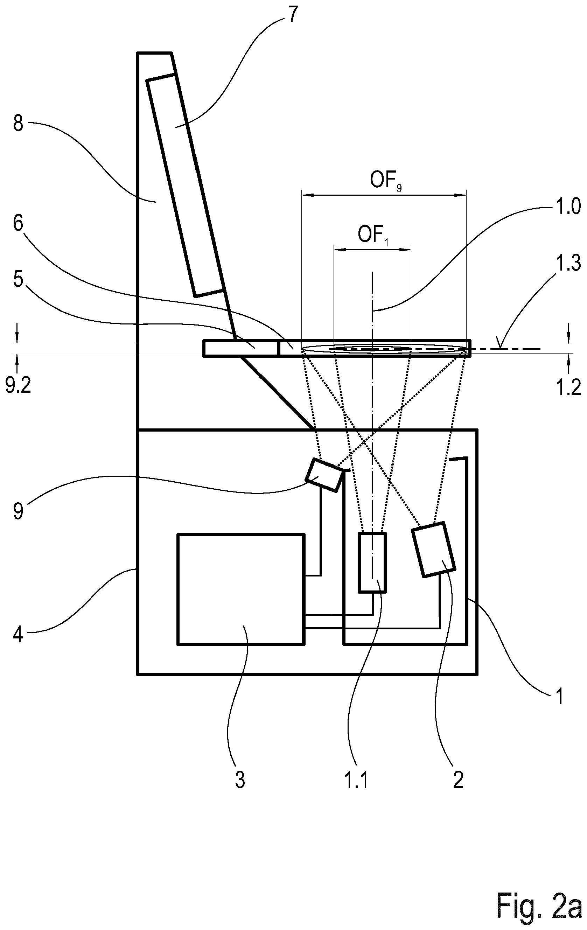

Gemäß einem ersten Ausführungsbeispiel einer erfindungsgemäßen Vorrichtung, dargestellt in den **Fig. 2a** **und** **2b****,** enthält das universale aktive Mittel eine Hilfskamera 9, die in einer bekannten Relativlage zur Hauptkamera 1.1 angeordnet ist. Sie bildet ein in der Objektebene 1.3 größeres Objektfeld OF₉ mit einer geringeren Auflösung ab, als die Hauptkamera 1.2 ein Objektfeld OF₁ mit einer höheren Auflösung abbildet. Die Hilfskamera 9 erzeugt, ebenso wie die Hauptkamera 1.1, Bilder in einem optischen 3D-Verfahren, womit aus den Bildern die räumliche Lage des Oberflächenbereiches in radialer und axialer Richtung bezogen auf die Soll-Position abgeleitet werden kann. Dabei ist das Objektfeld OFg der Hilfskamera 9 bevorzugt in einer Größe von mindestens 90% der Größe der Aussparung 6 des Rahmens 5, sodass auch eine breite Hand in jeder möglichen Ist-Position durch die Hilfskamera 9 abgebildet wird. Die Auflösung der Hilfskamera 9 ist dabei vorteilhaft nur so groß, dass aus dem Bild auf die Lokalisierung des Oberflächenbereiches geschlossen werden kann. Soll die Hilfskamera 9 zusätzlich zur Lokalisierung weitere Funktionen erfüllen, kann es sein, dass sie vorteilhaft ein höheres Auflösungsvermögen aufweist, dass jedoch für jeden Fall geringer ist, als das der Hauptkamera 1.1. Damit erfolgt die Bildverarbeitung von Bildern mit der Hilfskamera 9 in jedem Fall schneller als die der Hauptkamera 1.1. Vorteilhaft ist auch ein Tiefenschärfebereich 9.2 der Hilfskamera 9 größer als der Tiefenschärfebereich 1.2 der Hauptkamera 1.1.

Abhängig von der räumlichen Lage, die jeweils während der aktiven Führung zeitabhängig eine Ist-Position darstellt, wird der Nutzer über die Ausgabeeinheit 7 iterativ geführt.

Verfahrenstechnisch erfolgt die Lokalisierung in axialer und radialer Richtung der optischen Achse 1.0 mit einer Hilfskamera 9, indem zeitlich nacheinander optische Abbildungen des Oberflächenbereiches erstellt werden, aus denen jeweils eine zum Zeitpunkt der Erstellung der optischen Abbildung gegebene Ist-Position des Oberflächenbereiches innerhalb der Ränder 5.1 des Rahmes 5 in axialer und radialer Richtung ableitbar ist. Die jeweilige Ist-Position wird mit der Soll-Position verglichen und abhängig von dem Vergleichsergebnis wird der Nutzer iterativ geführt, bis der ausgewählte Oberflächenbereich die Soll-Position erreicht hat und mit der Hauptkamera 1.1 Bilder aufgenommen werden. Es können auch Bilder aufgenommen werden, wenn sich nur Teile des Oberflächenbereiches in der Soll-Position befinden. Es werden dann eine Vielzahl von Bildern erstellt in denen sich unterschiedliche Teile des Oberflächenbereiches in der Soll-Position befinden. Aus der Vielzahl der Bilder, wird dann ein Gesamtbild erstellt, das eine scharfe Abbildung des gesamten Oberflächenbereiches darstellt.

Die Verwendung der Hilfskamera 9 hat vergleichsweise zu allen nachfolgend angegebenen zweiten bzw. ersten modifizierten Mitteln den Vorteil, dass mit ihr sehr genau die Ist-Position des Oberflächenbereiches erfassbar ist, die durch Handposition in der Aussparung 6 und die Handhaltung (Handkrümmung) bestimmt ist. Durch die Erfassung der Handhaltung ergibt sich der Vorteil einer optimierten Nutzerführung mit detaillierten Vorgaben zur verbesserten Abbildung des Oberflächenbereiches mit der Hauptkamera 1.1. Wird die Hand beispielsweise zu schräg, um 90° oder gar um 180° (Handrücken schaut in Richtung Hauptkamera) zur Soll-Position im Rahmen 5 gehalten, kann eine angepasste Nutzerführung erfolgen, die den Nutzer davon in Kenntnis setzt, dass er seine Hand für eine erfolgreiche Abbildung entsprechend drehen muss. Gleiches gilt für eine schräge Handpositionierung innerhalb der Ebene der Aussparung. Gleiches gilt für das Präsentieren gekrümmter Finger, das eine optimale Abbildung des gesamten Oberflächenbereichs erschwert und durch die Hilfskamera 9 erkannt wird. Vorteilhaft gibt es mit der Hilfskamera 9 auch die Möglichkeit für die Unterscheidung zwischen einer künstlichen Hand bzw. einer mit einem Überzug versehen natürlichen Hand und einer natürlichen Hand.

So kann in einer ersten Verfahrensausführung die Erkennung über eine Annäherungsanalyse erfolgen. Dabei werden die aufeinanderfolgend aufgenommenen Bilder untereinander vergleichend analysiert, ob die zur Soll-Position geführte Bewegung durch eine Zitterbewegung überlagert ist, die für eine echte natürliche Hand charakteristisch ist.

Zusätzlich oder in einer zweiten Verfahrensausführung erhält der Nutzer über die Ausgabeeinheit 7 Weisungen, um die Handhaltung durch bestimmte Bewegungen, zum Beispiel die Finger zu krümmen oder einzelne Finger zu bewegen, zu verändern, was eine künstliche Hand zumindest in einer natürlichen Art und Weise nicht kann, womit diese als Fälschung erkannt wird.

Zur Weisung kann auf der Ausgabeeinheit 7 z.B. in Form eines Displays ein Bild der Hand des Nutzers, die angewiesene Bewegung ausführend, angezeigt sein. Zusätzlich kann über eine Symbolik dem Nutzer eine Rückmeldung gegeben werden. Alternativ kann z.B. eine virtuelle Hand in realer Umgebung auf dem Display dargestellt sein, wobei die virtuelle Hand die Bewegung für die reale Hand vorgibt und eine vorgegebene Position und Handhaltung einnimmt.

Durch Aufforderung von Gesten, wie "Hand krümmen", "ausgestreckter Zeigefinger" oder "Hand gerade", kann eine künstliche Hand, wie z.B. eine Gummihand, erkannt werden, da diese nicht im Stande ist, der Aufforderung nachzukommen.

Auch der Aufforderung zu einem bestimmten Bewegungsablauf bei der Bildaufnahme, wie z.B. erst die rechte Hand, dann die linke Hand und abschließend die beiden Daumen in den Rahmen einzuführen, kann eine künstliche Hand, wie eine Vollvolumen-Gummihand, ebenfalls nicht folgen, da sie einzelne Fingerglieder nicht unabhängig voneinander bewegen kann.

In einer dritten Verfahrensausführung werden in den Bildern der Hilfskamera 9 oder der Hauptkamera 1.1 gegebenenfalls für natürliche Hände untypische Unstetigkeitsstellen bzw. Gradienten, insbesondere scharfe Abgrenzungen bzw. Kanten, festgestellt, die bei Überziehern oder auf den Finger aufgelegten 2D-Fälschungen typischerweise entstehen.

Für weitere Verfahrensausführungen wird vorgeschlagen, mit Licht mindestens einer Wellenlänge zu beleuchten, welches durch das Blut in den Blutgefäßen absorbiert wird, sodass diese im Bild einer echten Hand erkennbar sind. Bei Licht mit mehr als einer Wellenlänge, kann das Spektrum des reflektierten Lichtanteils analysiert werden. Zum einen kann man davon ausgehen, dass eine künstliche Hand nicht die gleichen spektralen Eigenschaften hat wie eine natürliche Hand, und zum anderen, dass eine künstliche Hand auch keine Gefäßstrukturen aufweist.

Alternativ oder zusätzlich kann das Vorhandensein eines Pulses über regelmäßige Mikrostrukturänderungen im Zeitverlauf der Bilder festgestellt werden.

Zum Erkennen von dünnen Überziehern für die gesamte Hand, in der Regel aus Gummi, werden die mit der Hauptkamera 1.1 aufgenommenen Bilder auf die typischen Abstände der Berge bzw. Täler der abgebildeten Papillarstruktur analysiert. Ein Überzieher, der mit einer künstlichen Papillarstruktur versehen ist, wird beim Überziehen auf eine natürliche Hand an unterschiedlichen Stellen der Hand unterschiedlich gedehnt, was zu lokal unterschiedliche Abständen führt.

Gemäß einem zweiten Ausführungsbeispiel einer erfindungsgemäßen Vorrichtung, nicht in den Zeichnungen dargestellt, enthält das zweite aktive Mittel mindestens einen ersten Abstandssensor 10. Der mindestens eine erste Abstandssensor 10.1 ist im Rahmen 5 angeordnet und so ausgerichtet, dass ein von ihm ausgehender Messstrahl parallel zur Objektebene 1.3 in die Aussparung 6 gerichtet ist.

Alternativ enthält das universelle aktive Mittel, wie in **Fig. 3** gezeigt, zusätzlich zu dem mindestens einen ersten Abstandssensor 10.1, mindestens einen zweiten Abstandssensor 10.2, der von Seiten der Hauptkamera 1.1, bevorzugt im Gehäuse 4 angeordnet, auf die Objektebene 1.3 gerichtet ist. Es können jeweils weitere erste und/ oder insbesondere zweite Abstandssensoren 10.1,10.2vorhanden sein. So ist eine genauere Lokalisierung in radialer Richtung, z.B. mit zwei im entgegengesetzten Richtungssinn abstrahlenden zweiten Abstandssensoren 10.2, möglich, wie in **Fig. 3** gezeigt. Sind die gemessenen Abstände zur Hand gleich, lässt sich darauf schließen, dass die Hand in radialer Richtung mittig in der Aussparung 6 angeordnet ist. Über mehrere zweite Abstandssensoren 10.2 kann auch die Neigung oder Krümmung der Hand (Handhaltung) erfasst werden.

Verfahrenstechnisch betrachtet, werden in Kenntnis der räumlichen Anordnung der jeweils ersten und zweiten Abstandssensoren 10.1, 10.2 und den gemessenen Entfernungswerten jeweils Differenzen gebildet, und über die Ausgabeeinheit 7 Weisungen erteilt, deren Befolgung zur Verringerung der Differenzen führen.

Die Weisungen können vorteilhaft akustischer Natur sein, indem z. B. ein Ton in seiner Frequenz verändert wird. So versteht ein Nutzer intuitiv das Ansteigen der Frequenz als an ein sich Annähern an ein Ziel, wie die Soll-Position, und den Übergang in einen Dauerton als das Erreichen des Ziels. Vorteilhaft ist in den wenigstens einen der Abstandssensoren 10.1, 10.2 ein Farbdetektor integriert, womit der von der Haut oder von der Fälschung zurückreflektierte Messstrahl farblich analysiert wird, um festzustellen, ob dessen Spektrum tatsächlich auf die Reflexion des Messstrahls auf einer natürlichen Hand zurückgeführt werden kann.

Gemäß einem dritten Ausführungsbeispiel einer erfindungsgemäßen Vorrichtung, nicht in den Zeichnungen dargestellt, enthält das zweite aktive Mittel zwei erste Lichtschranken 11.1, die ein erstes Lichtstrahlenpaar 11 bilden. Sie sind im Rahmen 5, vorteilhaft in der Objektebene 1.3 abstrahlend und spiegelsymmetrisch zu einer durch die optische Achse 1.0 verlaufende Parallelen zur Einführrichtung der Hand so angeordnet, dass die von den Lichtschranken 11.1 abgestrahlten Lichtstrahlen aufeinander zulaufen.

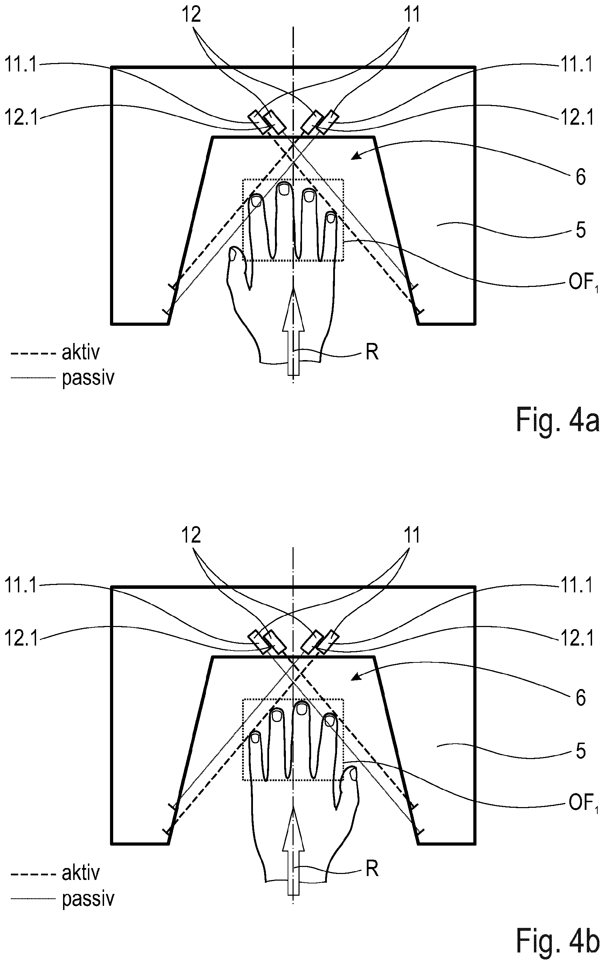

Wird eine Hand in der Einführrichtung in die Aussparung 6 mittig eingeführt, werden beide ersten Lichtschranken 11.1 im nahezu gleichen Moment unterbrochen. Eine zeitliche Differenz ergibt sich durch die unterschiedlichen Längen von kleinem Finger und Zeigefinger. Diesen typischen Unterschied kennend, der sich für die beiden Hände eines Nutzers nicht wesentlich unterscheidet, ist vorteilhaft, wie in den **Fig. 4a und 4b** dargestellt, ein zweites Lichtschrankenpaar 12, mit zweiten Lichtschranken 12.1, die parallel zu den ersten beiden Lichtschranken 11.1 abstrahlen und zum ersten Lichtschrankenpaar 11 in der Einführrichtung versetzt angeordnet sind. Bei Einführung der linken oder der rechten Hand, wird jeweils ein anderes Lichtschrankenpaar 11, 12 aktiv geschaltet, womit die Lichtschranken 11.1, 12.1 mit einem geringeren Zeitabstand zueinander unterbrochen werden, sofern die Hand exakt mittig eingeführt wurde.

Verfahrenstechnisch führt der Nutzer die Hand in der Einführrichtung wiederholt in den Rahmen 5 ein bis die Lichtstrahlen bei der jeweils aktivierten Lichtschranke 11.1, 12.1 unterbrochen sind. Durch eine geringfügige Vor- und Rückwärtsbewegung können die Lichtstrahlen immer wieder erneut unterbrochen werden, wobei sich durch eine gleichzeitig seitliche Bewegung der zeitliche Abstand zwischen den Unterbrechungen an ein Minimum annähert. Das Erreichen des Minimums deutet darauf hin, dass in radialer Richtung die Soll-Position erreicht wurde.

Grundsätzlich ist es von Vorteil, wenn die Ausgabeeinheit 7, unabhängig von der Ausführung des ersten und zweiten aktiven Mittels oder des universellen aktiven Mittels, ein Display ist. Über das Display können für den Nutzer Anweisungen, wie intuitive Führung, konkretes Feedback bei Fehlererkennung und sonstige Informationen, auf eine angenehme Art und Weise vermittelt werden.

So kann beispielsweise über ein Display mit einer sehr geringen Latenz ein Feedback über die korrekte Handhaltung und Handposition gegeben bzw. dem Nutzer hierzu symbolisch Anweisungen erteilt werden. Des Weiteren kann eine korrekte Handhaltung durch eine 3D-Sollhand auf dem Display dargestellt werden, um den Nutzer zu animieren, seine Hand, deren Bild ebenfalls bevorzugt anders farblich in 3D dargestellt wird, in räumliche Übereinstimmung mit der 3D-Sollhand zu bringen ist. Wenn es für den Nutzer schwierig zu erkennen ist, wie gut das Bild seiner Hand positioniert ist, lässt sich zusätzlich noch die Farbe des Bildes seiner Hand oder der 3D-Sollhand fortlaufend ändern, z. B. von orange nach grün. Auch lässt sich die jeweils noch verbleibende Abweichung von der richtigen Positionierung und Handhaltung, der Soll-Position, anzeigen. Als Alternative zu einer solchen 3D-Nutzerführung können ebenfalls Piktogramme zur Nutzerführung verwendet werden.

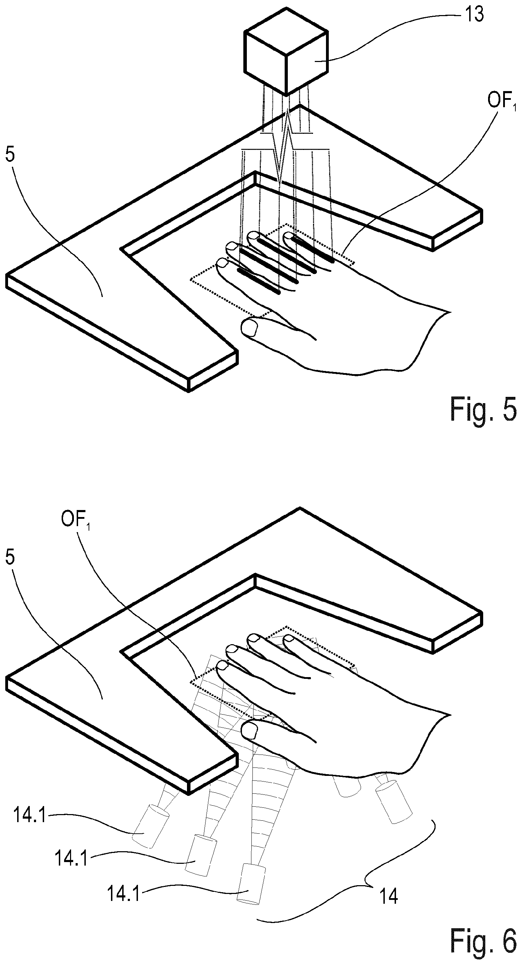

Gemäß einem vierten Ausführungsbeispiel einer erfindungsgemäßen Vorrichtung enthält das universelle aktive Mittel einen Projektor 13, siehe **Fig. 5****,** der auf einer der Hauptkamera 1.1 abgewandten Seite der Objektebene 1.3 angeordnet ist und ein zweidimensionales Muster in Richtung der Aussparung 6 projiziert. Das Muster wird so in die Aussparung 6 projiziert, dass es, wenn sich der ausgewählte Oberflächenbereich in der Soll-Position befindet, vollständig und scharf auf der Hand abgebildet wird. Unter einer scharfen Abbildung wird hier eine Abbildungsqualität verstanden, die sich bei einer axialen Bewegung der Hand mit einem entgegengesetzten Richtungssinn jeweils verschlechtert. Das Muster kann vorteilhaft durch Striche gebildet sein, die bei korrekter Handhaltung der Hand mittig auf den Fingern für den Nutzer sichtbar sind. Anstatt von Strichen können auch Symbole, wie z.B. Smileys, auf die Finger projiziert werden, die z.B. bei Erreichen einer richtigen Position die Farbe wechseln, wenn sich die Finger in der Soll-Position befinden.

Mit einer einfachen Projektion eines zweidimensionalen Musters kann so eine radiale und eine axiale Führung erfolgen und gleichzeitig dem Nutzer angezeigt werden, ob die Finger sich bereits in der Soll-Lage befinden, womit das Muster zusätzlich die Funktion der Ausgabeeinheit 7, zum Bereitstellen einer Rückmeldung über die jeweilige Ist-Position der Hand, erfüllt.

Gemäß einem fünften Ausführungsbeispiel einer erfindungsgemäßen Vorrichtung enthält diese, wie in **Fig. 6** gezeigt, einen Ultraschallgeber 14, der über wahrnehmbare Druckpunkte innerhalb des Rahmens 5 eine berührungslose Haptik erzeugt, die dem Nutzer eine virtuelle Fläche suggeriert, auf die er seine Hand legt, um sie in der Soll-Position zu positionieren. Der Ultraschallgeber 14 wird dabei schräg unterhalb der Objektebene 1.3 angeordnet, um eine effektive berührungslose Haptik unter dem aufzunehmenden Oberflächenbereich zu erzeugen. Optional können weitere Ultraschallgeber 14 oberhalb der Objektebene 1.3 und / oder im Rahmen 5 integriert angeordnet sein. Der mindestens eine Ultraschallgeber 14 besteht aus einem Array von mehreren einzeln ansteuerbaren Ultraschallwellenerzeugern 14.1, die, dort, wo sie miteinander interferieren, ein spürbares haptisches Feedback im Raum erzeugen. Zur Steuerung wird über das erste und das zweite aktive Mittel oder das universelle aktive Mittel, das zum Bsp. die Hilfskamera 9 ist, die jeweilige Ist-Lage bestimmt, an die Rechen- und Steuereinheit 3 geleitet und in Abhängigkeit von der erfassten Ist-Position wird der mindestens eine Ultraschallgeber 14 entsprechend angesteuert.

Mit der Integration einer haptisch spürbaren, virtuellen Fläche im Raum kann die Soll-Position für den aufzunehmenden Oberflächenbereich in axialer und radialer Richtung nachbildet werden. Verlässt der Oberflächenbereich die Soll-Position, kann der durch den mindestens einen Ultraschallgeber 14 ausgeübte Druck auf den Oberflächenbereich erhöht werden, um den Nutzer intuitiv wieder in die Soll-Position zu bewegen.

Das haptische Feedback kann dem Nutzer ebenfalls punktuell präsentiert werden. Wenn dieser während der Bildaufnahme die Hand gekrümmt hält, kann mehr Druck auf die nach unten stehenden Teile der Hand, (z. B. Fingerspitzen und Handballen), erzeugt werden, womit der Nutzer intuitiv die Hand streckt.

Auch kann, indem die Anzahl an Druckpunkten pro Fläche auf dem Oberflächenbereich vergrößert wird, dem Nutzer suggeriert werden, dass sich die Hand der Soll-Position nähert.

Optional kann die die berührungslose Haptik mit einer bestimmten, sich ändernden Frequenz den Oberflächenbereich abscannen. Die spürbaren Druckpunkte tasten dann mit der sich verändernden Frequenz die Fingerkuppen oder die Handinnenseite ab, wobei sich die Frequenz in Abhängigkeit der Abweichung zur Soll-Position verändert. Zum Beispiel können so, die Fingerspitzen oder die Handfläche jede Sekunde einen Druckpunkt durch das Ultraschallarray spüren. Nähert sich die Hand der Soll-Position, erhöht sich die Frequenz, zum Beispiel wird die Handfläche dann mit 10 Druckpunkten pro Sekunde abgetastet. Somit wird ein Annäherungsfeedback an den Nutzer realisiert.

Das haptische Feedback kann ebenfalls mit einem Feedback auf einem Display als Ausgabeeinheit abgestimmt werden. Eine kreisende Uhr kann z.B. über das Display und/oder auf die Hand projizierten Symbolen visuell suggerieren, dass aktuell die Bildaufnahme des Oberflächenbereichs durch die Hauptkamera 1.1 läuft. Parallel dazu kann eine kreisende berührungslose Haptik auf dem Oberflächenbereich diesen Effekt unterstützen und dem Nutzer so den Status der Bildaufnahme verdeutlichen, z.B. Bildaufnahme noch nicht gestartet, aktuelle Bildaufnahme läuft, oder Bildaufnahme ist fertig. Diese visuelle Darstellung kann statt auf dem Display alternativ auch mittels des Projektors 13 direkt auf der Hand dargestellt werden.

Bei der Verwendung eines Ultraschallgebers 14, kann vorteilhaft der Effekt des Entstehens eines leichten Druckes auf den Oberflächenbereich auch zur Erhöhung der Abbildungsqualität genutzt werden. Durch ein individuell angepasstes Eindrücken des Oberflächenbereiches, wird die durch die Papillarstruktur gegebene 3D-Form des Oberflächenbereiches in Richtung 2D umgeformt, womit sich, insbesondere bei einem nur schmalen Tiefenschärfebereich 1.2, größere Flächen des Oberflächenbereichs in der Soll-Position befinden und aufgenommen werden können, da zum Beispiel ein Finger flacher gedrückt werden kann. Die Umrechnung in ein finales 2D-Bild kann so ebenfalls schneller erfolgen. Um den korrekten Zeitpunkt für die Bildaufnahme zu wählen, wird die 3D-Bildaufnahme entsprechend mit der Ultraschallimpulsgebung synchronisiert.

Auch kann der Ultraschallgeber 14 vorteilhaft zur Fälschungserkennung eingesetzt werden. Bei Verdacht auf eine Fälschung werden verschiedene Druckpunkte und/oder Druckflächen erzeugt, die bei einem menschlichen bzw. natürlichen Oberflächenbereich eine bestimmte Aktion auslösen würden, da der Mensch den Druckpunkt fühlt. Liegt eine Fälschung auf dem Oberflächenbereich oder wird ein Fälschungsüberzug über der Hand getragen, wird das haptische Feedback nicht wahrgenommen. Denkbar ist eine Erkennung über eine Interaktion über das Display per Frage, wie viele Druckpunkte fühlbar sind, oder ob sich ein Druckpunkt im oder gegen den Uhrzeigersinn bewegt, oder ob er nach links/rechts oder oben/unten wandert, um festzustellen, ob ein gefälschter oder natürlicher Oberflächenbereich dem Gerät zur Bildaufnahme von 3D-Hautabdrücken präsentiert wird. Als eine besonders vorteilhafte intuitive Interaktionsmöglichkeit wird vorgeschlagen, dass der Nutzer seine Hand bzw. Finger von der Richtung aus der die Druckpunkte wirken, wegbewegen soll. In diesem Fall wird das Wahrnehmen des Drucks dadurch überprüft, dass der Nutzer in einem definierten Zeitfenster nach dem Erzeugen des Signals auf dieses reagiert.

Der mindestens eine Ultraschallgeber 14 ist unterhalb der Objektebene 1.3 angeordnet. Weitere Ultraschallgeber 14 können oberhalb oder auch innerhalb des Rahmens 5 angeordnet sein. Vorteilhaft sind mehrere Ultraschallgeber im14 Raum, um die Aussparung 6 verteilt, angeordnet, um von verschiedenen Seiten Druck auf die Hand ausüben zu können.

Gemäß einem sechsten, in den Zeichnungen nicht dargestellten Ausführungsbeispiel einer erfindungsgemäßen Vorrichtung ist, vergleichbar mit den dem Ultraschallgeber 14 zukommenden Funktionen, ein Druckluftgeber mit einer Vielzahl von ansteuerbaren Düsen vorhanden. Über die gezielte Ansteuerung der einzelnen Düsen, kann die Hand geführt werden oder zu Bewegungen angeregt werden, die gegebenenfalls belegen, dass es sich um eine natürliche Hand handelt.

### Bezugszeichenliste

- 1: Bilderfassungseinheit
- 1.0: optische Achse
- 1.1: Hauptkamera
- 1.2: Tiefenschärfebereich
- 1.3: Objektebene
- 2: Beleuchtungseinheit
- 3: Rechen- und Steuereinheit
- 4: Gehäuse
- 5: Rahmen
- 5.1: Rand
- 6: Aussparung
- 7: Ausgabeeinheit
- 8: Gestell
- 9: Hilfskamera
- 9.2: Tiefenschärfebereich der Hilfskamera
- OF₁: Objektfeld der Hauptkamera
- OF₉: Objektfeld der Hilfskamera
- 10.1: erster Abstandssensor
- 10.2: zweiter Abstandssensor
- 11: erstes Lichtschrankenpaar
- 11.1: erste Lichtschranke
- 12: zweites Lichtschrankenpaar
- 12.1: zweite Lichtschranke
- 13: Projektor
- 14: Ultraschallgeber
- 14.1: Ultraschallwellenerzeuger

- R: Einführrichtung

## Patentansprüche

1. Vorrichtung zur berührungslosen optischen Abbildung eines ausgewählten Oberflächenbereiches einer Hand eines Nutzers, mit
einem Gehäuse (4) in dem eine Bilderfassungseinheit (1), enthaltend eine Hauptkamera (1.1) mit einer optischen Achse (1.0) und eine Beleuchtungseinheit (2), untergebracht ist,
einer Steuer- und Recheneinheit (3),
einer Ausgabeeinheit (7),
einem außerhalb des Gehäuses (4) angeordneten, über ein Gestell (8) mit dem Gehäuse (4) verbunden Rahmen (5), mit Rändern (5.1) die eine einseitig offene Aussparung (6) begrenzen, die frontal zu einer Nutzerposition des Nutzers geöffnet ist und in der der Oberflächenbereich durch den Nutzer positioniert wird, eine Ist-Position einnehmend, wobei innerhalb des Rahmens (5) eine Objektebene (1.3) der Hauptkamera (1.1) mit einem Tiefenschärfebereich (1.2) angeordnet ist, in dem sich eine Soll-Position für den Oberflächenbereich befindet,
**dadurch gekennzeichnet,**
**dass** ein erstes aktives Mittel zur Lokalisierung der Ist-Position in axialer Richtung der optischen Achse (1.0) und ein zweites aktives Mittel zur Lokalisierung der Ist-Position in radialer Richtung der optischen Achse (1.0) vorhanden ist, oder
**dass** ein universales aktives Mittel zur Lokalisierung der Ist-Position in axialer und in radialer Richtung der optischen Achse (1.0) vorhanden ist.

2. Vorrichtung zur berührungslosen optischen Abbildung eines ausgewählten Oberflächenbereiches einer Hand eines Nutzers nach Anspruch 1, **dadurch gekennzeichnet,**
**dass** das universale aktive Mittel eine Hilfskamera (9) enthält, die im Vergleich zur Hauptkamera (1.1) ein größeres Objektfeld (OF₉) und eine geringere Auflösung aufweist, wobei das Objektfeld (OFg) der Hilfskamera (9) und das Objektfeld (OF₁₀) der Hauptkamera (1.1) in der Objektebene (1.3) der Hauptkamera (1.1) liegen.

3. Vorrichtung zur berührungslosen optischen Abbildung eines ausgewählten Oberflächenbereiches einer Hand eines Nutzers nach Anspruch 1, **dadurch gekennzeichnet,**
**dass** das zweite aktive Mittel mindestens einen ersten Abstandssensor (10.1) enthält, der parallel zur Objektebene (1.3) abstrahlt, oder das universelle aktive Mittel mindestens einen ersten Abstandssensor (10.1) und mindestens einen zweiten Abstandssensor (10.2), der unter einem Winkel ungleich 0° zu dem wenigstens einen ersten Abstandssensor (10.1) abstrahlt, enthält.

4. Vorrichtung zur berührungslosen optischen Abbildung eines ausgewählten Oberflächenbereiches einer Hand eines Nutzers nach Anspruch 1, **dadurch gekennzeichnet,**
**dass** das zweite aktive Mittel zwei erste Lichtschranken (11.1) enthält, die ein erstes Lichtstrahlenpaar (11) bilden und in / oder parallel zur Objektebene (1.3) abstrahlend, einen Winkel ungleich Null miteinander einschließend, spiegelsymmetrisch zu einer durch die optische Achse (1.0) verlaufenden Parallelen zu einer Einführrichtung (R) der Hand angeordnet sind.

5. Vorrichtung zur berührungslosen optischen Abbildung eines ausgewählten Objektbereiches einer Hand eines Nutzers nach einem der Ansprüche 1 bis 4, **dadurch gekennzeichnet,**
**dass** die Ausgabeeinheit (7) ein Display ist.

6. Vorrichtung zur berührungslosen optischen Abbildung eines ausgewählten Oberflächenbereiches einer Hand eines Nutzers nach Anspruch 1, **dadurch gekennzeichnet,**
**dass** das zweite aktive Mittel oder das universelle aktive Mittel ein Projektor (13) ist, der auf einer der Hauptkamera (1.1) abgewandten Seite der Objektebene (1.3) angeordnet ist und ein Muster in die Aussparung (6) projiziert.

7. Vorrichtung zur berührungslosen optischen Abbildung eines ausgewählten Oberflächenbereiches einer Hand eines Nutzers nach einem der Ansprüche 1 bis 4, **dadurch gekennzeichnet,**
**dass** die Ausgabeeinheit (7) einen Ultraschallgeber (14) enthält, der geeignet ist haptisch wahrnehmbare Druckpunkte auf einer virtuellen Ebene, welche der Soll-Position in axialer Richtung entspricht, zu erzeugen.

8. Vorrichtung zur berührungslosen optischen Abbildung eines ausgewählten Oberflächenbereiches einer Hand eines Nutzers nach Anspruch 1, **dadurch gekennzeichnet,**
**dass** die Ausgabeeinheit (7) einen Druckluftgeber enthält mit einer flächenhaften Anordnung von Düsen, die in die Aussparung (6) gerichtet sind.

9. Verfahren zur berührungslosen optischen Abbildung eines ausgewählten Oberflächenbereiches einer Hand eines Nutzers, bei dem der ausgewählte Oberflächenbereich in eine vorgegebene Soll-Position, innerhalb eines Tiefenschärfebereiches (1.2) um eine Objektebene (1.3) einer Hauptkamera (1.1) mit einer optischen Achse (1.0) positioniert wird, wobei der Nutzer den zu erfassenden Oberflächenbereich in einen den Tiefenschärfebereich (1.2) einschließenden Rahmen (5) einführt, wobei der Oberflächenbereich eine Ist-Position einnimmt, die Ist-Position in axialer Richtung bezogen auf die optische Achse (1.0) lokalisiert wird, und der Nutzer mittels einer Ausgabeeinheit (7), iterativ geführt, die Ist-Position ändert und den Oberflächenbereich in axialer Richtung zu der vorgegebenen Soll-Position bewegt, in der von dem Oberflächenbereich wenigstens ein Bild mit der Hauptkamera (1.1) erzeugt wird, **dadurch gekennzeichnet,**
**dass** die Ist-Position auch in radialer Richtung bezogen auf die optische Achse (1.0) lokalisiert wird und der Nutzer, iterativ geführt, den Oberflächenbereich auch in radialer Richtung in die vorgegebene Soll-Position bewegt.

10. Verfahren zur berührungslosen optischen Abbildung eines ausgewählten Oberflächenbereiches einer Hand eines Nutzers, nach Anspruch 9, **dadurch gekennzeichnet,**
**dass** die Ist-Position wiederholt in axialer und radialer Richtung durch die Auswertung einer Vielzahl von zeitlich nacheinander aufgenommener Bilder einer Hilfskamera lokalisiert wird, wobei die Bilder der Hilfskamera mit einer geringeren Auflösung erstellt werden als das wenigstens eine Bild mit der Hauptkamera eine Auflösung aufweist.

11. Verfahren zur berührungslosen optischen Abbildung eines ausgewählten Oberflächenbereiches einer Hand eines Nutzers, nach Anspruch 10, **dadurch gekennzeichnet,**
**dass** die mit einer geringeren Auflösung zeitlich nacheinander aufgenommenen Bilder untereinander verglichen werden, und analysiert wird, ob die Bewegung zur Soll-Position hin durch Zitterbewegungen oder das Pulsieren von Blutgefäßen überlagert wird, um eine echte von einer unechten Hand zu unterscheiden.

12. Verfahren zur berührungslosen optischen Abbildung eines ausgewählten Oberflächenbereiches einer Hand eines Nutzers, nach Anspruch 11, **dadurch gekennzeichnet,**
**dass** über die Ausgabeeinheit (7) Weisungen gegeben werden die Handhaltung zu verändern, um aus dem Ablauf der Veränderung gegebenenfalls auf eine natürliche Hand zu schließen.

13. Verfahren zur berührungslosen optischen Abbildung eines ausgewählten Oberflächenbereiches einer Hand eines Nutzers, nach Anspruch 10, **dadurch gekennzeichnet,**
**dass** die Bilder der Hilfskamera auf für eine natürliche Hand untypische Unstetigkeitsstellen oder Gradienten analysiert werden, um gegebenenfalls auf eine künstliche Hand zu schließen.

14. Verfahren zur berührungslosen optischen Abbildung eines ausgewählten Oberflächenbereiches einer Hand eines Nutzers, nach Anspruch 9, **dadurch gekennzeichnet,**
**dass** der Oberflächenbereich mit Licht wenigstens einer Wellenlänge bestrahlt wird oder ein Messstrahl mit der wenigstens einen Wellenlänge auf den Oberflächenbereich gerichtet wird, wobei das Licht durch Blutgefäße in der Hand absorbiert wird, wobei bei Licht mit nur einer Wellenlänge eine räumliche Strukturierung im Bild entsprechend der Blutgefäßstruktur entsteht und Licht mit mehr als einer Wellenlänge das reflektierte Wellenlängenspektrum bzw. die Menge des an dem Oberflächenbereich reflektierten Lichtanteils analysiert wird, um gegebenenfalls auf eine natürliche Hand zu schließen.

15. Verfahren zur berührungslosen optischen Abbildung eines ausgewählten Oberflächenbereiches einer Hand eines Nutzers, nach Anspruch 9, **dadurch gekennzeichnet,**
**dass** das mindestens eine Bild der Hauptkamera (1.1) auf untypische Abstände von Bergen und Tälern in einer Papillarstruktur des Oberflächenbereiches analysiert wird, um gegebenenfalls auf eine künstliche Hand zu schließen.

16. Verfahren zur berührungslosen optischen Abbildung eines Oberflächenbereiches einer Hand eines Nutzers, nach Anspruch 9, **dadurch gekennzeichnet,**
**dass** in die Aussparung ein zweidimensionales Muster projiziert wird, und der Nutzer die Hand innerhalb des Rahmens bewegt bis das Muster auf der Rückseite der Hand, vollständig und scharf abgebildet wird.

17. Verfahren zur berührungslosen optischen Abbildung eines Oberflächenbereiches einer Hand eines Nutzers nach Anspruch 16, **dadurch gekennzeichnet,**
**dass** die Abbildung des Musters in seiner Farbe oder in seiner Auflösung in Abhängigkeit von der Nähe zur Soll-Position verändert wird.

18. Verfahren zur berührungslosen optischen Abbildung eines ausgewählten Oberflächenbereiches einer Hand eines Nutzers nach Anspruch 9, **dadurch gekennzeichnet,**
**dass** mittels Ultraschall oder Luftdruck haptisch wahrnehmbare Druckpunkte auf dem Oberflächenbereich erzeugt werden, die den Nutzer zu Bewegungen animieren, die nur durch eine natürliche Hand erfolgen können oder die iterative Führung in die Soll-Position unterstützen.
